# EUROPÄISCHE PATENTSCHRIFT

(11) **EP 1 807 612 B1**
(45) Veröffentlichungstag und Bekanntmachung des Hinweises auf die Patenterteilung: **19.08.2009**
(21) Anmeldenummer: 05784557.0
(22) Anmeldetag: 08.09.2005
(51) Int. Cl.: F01N 3/20, B01D 53/94, F01N 3/025

(54) **VORRICHTUNG UND VERFAHREN ZUR ERZEUGUNG EINES BETRIEBSMITTELS FÜR EIN KRAFTFAHRZEUG**
DEVICE AND METHOD FOR PRODUCING AN OPERATING MEDIUM FOR A MOTOR VEHICLE
DISPOSITIF ET PROCÉDÉ DE PRODUCTION DE CARBURANT D'UN VÉHICULE AUTOMOBILE

(30) Priorität: 26.10.2004 DE 102004051905
(43) Veröffentlichungstag der Anmeldung: 18.07.2007
(73) Patentinhaber: ROBERT BOSCH GMBH, 70442 Stuttgart (DE)
(72) Erfinder: BAREIS, Marc, 71706 Markgroeningen (DE); ILGNER, Frank, 70499 Stuttgart (DE); HARNDORF, Horst, 34270 Schauenburg (DE); STEINBACH, Nils, 70437 Stuttgart (DE)
(86) Internationale Anmeldenummer: PCT/EP2005/054459
(87) Internationale Veröffentlichungsnummer: WO 2006/045669

(56) Entgegenhaltungen:
- EP-A- 0 309 723
- EP-A- 1 369 557
- WO-A-03/091551
- DE-A1- 4 315 278
- US-A- 4 383 411
- US-A- 4 576 617

## Beschreibung

### Stand der Technik

Die Erfindung geht aus von einer Vorrichtung bzw. einem Verfahren nach der Gattung der unabhängigen Ansprüche. Die Abgasreinigung bei Otto- und Dieselmotoren gewinnt immer mehr an Bedeutung. Im überstöchiometrischen Abgas, also beim Magerbetrieb eines Ottomotors bzw. beim Betrieb eines Dieselmotors, können die bei der Verbrennung entstehenden Stickoxide aufgrund des Sauerstoffüberschusses nicht ausreichend abgebaut werden. Daher wird auch bei Dieselfahrzeugen eine weitergehende Abgasnachbehandlung bezüglich Partikel- und NOₓ - Emissionen erforderlich. Zur Reduzierung der NOₓ - Emissionen bieten sich hierbei die NOₓ - Speicherkatalysatoren an. Diese speichern auch unter überstöchiometrischen Bedingungen Stickoxide ein. Mit zunehmender Menge an eingespeicherten Stickoxiden nimmt die Speicherfähigkeit ab, sodass der Speicherkatalysator in regelmäßigen Abständen wieder ausgeräumt bzw. regeneriert werden muss. Dies ist nur in einer reduzierenden Umgebung möglich, das heißt es müssen zunächst fette Abgasbedingungen (Lambdawert < 1) eingestellt werden. Aus der DE 100 62 956 ist bereits bekannt, außerhalb der Abgasleitung der Brennkraftmaschine eines Kraftfahrzeugs ein Reduktionsmittel an Bord des Kraftfahrzeugs zu Erzeugen und nachmotorisch dem Abgas vor Eintritt in einen DeNOx - Katalysator zuzuführen.

### Vorteile der Erfindung

Die erfindungsgemäße Vorrichtung bzw. das erfindungsgemäße Verfahren zur Erzeugung eines Betriebsmittels haben demgegenüber den Vorteil einer bedarfsgerechten und dynamischen Bereitstellung eines Betriebsmittels, insbesondere eines Synthesegases, bei kurzen Startzeiten und passgenauer Ansprechbarkeit. Im Vergleich zur Menge an Betriebsmittel, die regelmäßig erzeugt wird, ist das Nachlaufvolumen klein, sodass neben einer bedarfsgerechten Bereitstellung innerhalb kurzer Zeiten ungenaue Dosierungen und somit überhöhter Betriebsmittelverbrauch bzw. Umweltbelastungen vermieden werden. Das erfindungsgemäße System ist in vielfältiger Weise einsetzbar, insbesondere zur Bereitstellung von Synthesegas mit hohen Anteilen von Wasserstoff und Kohlenmonoxid zur Regenerierung von NOₓ - Speicherkatalysatoren. Darüber hinaus kann das System auch zur Regenerierung und Desulfatisierung von Rußpartikelfiltern eingesetzt werden. Neben diesen Anwendungen bei der dieselmotorischen Abgasnachbehandlung lässt sich ein mittels der erfindungsgemäßen Vorrichtung bereitgestelltes Synthesegas auch für ein verbessertes Motorverhalten bezüglich Kaltstart und Mischbetrieb einsetzen, also dem Kraftstoff zusetzen, den die Brennkraftmaschine zum Antrieb des Kraftfahrzeugs verwendet. Darüber hinaus kann ein mittels der erfindungsgemäßen Vorrichtung erzeugter Wasserstoff auch in mobilen Brennstoffzellensystemen als Brennstoff dienen. Über eine separate Ausgangsstoffzuführungseinheit zugeführter Ausgangsstoff wird durch das kleine Volumen an erhitztem und dann verbrannten Ausgangsstoffes, insbesondere durch die entstehenden Verbrennungsprodukte bzw. Verbrennungsgase gut erwärmt bzw. erhitzt und gleichzeitig mit der zugeführten Luft durchmischt, sodass eine warme bzw. heiße Ausgangsstoff- Luft- Mischung in der Brennkammer erzeugt wird, die in effizienter Weise beispielsweise in einem Reformerkatalysator zur partiellen Oxidation zur Erzeugung eines Reduktionsmittels verwendet werden kann, der in einem weiteren Schritt in der Abgasleitung einer Brennkraftmaschine zur Regenerierung eines NOₓ - Speicherkatalysators genutzt werden kann.

Durch die in den abhängigen Ansprüchen und in der Beschreibung aufgeführten Maßnahmen sind vorteilhafte Weiterbildungen und Verbesserung der in den unabhängigen Ansprüchen angegebenen Vorrichtungen bzw. Verfahren möglich. Besonders vorteilhaft ist, dass eine Brennkammer außerhalb der Abgasleitung des Kraftfahrzeugs angeordnet ist, sodass definierte Luftbedingungen in der Kammer eingestellt werden können.

Des weiteren ist es vorteilhaft, die Luftzuleitung derart auszuführen, dass der Luftstrom mit einem Drall beaufschlagt wird. Durch ein schräg bzw. im rechten Winkel zur Mündung der Luftzuleitung in der Brennkammer angeordnetes Luftzufuhrsystem wird eine schnelle und gute Durchmischung des erhitzten Ausgangsstoffs mit zugeführter Luft erzielt.

In vorteilhafter Weise wird ein Vorheizelement als Glühstiftkerze ausgebildet, die als Standardbauteil bereits vorhanden ist und in effizienter Weise einen relativ kleinen mit Ausgangsstoff bespülbaren Raum, insbesondere Ringspalt, bereitstellt, sodass erstens eine schnelle Erhitzung kleiner Volumina erfolgen kann und zweitens ein Nachlaufvolumen beim Ausschalten des Systems in Relation zum insgesamt mittels der Vorrichtung umgesetzten Ausgangsstoff kleingehalten werden kann.

Mittels eines Zündelements, insbesondere einer Zündkerze, kann in vorteilhafter Weise der erhitzte Ausgangsstoff, der bereits mit zugeführter Luft vermischt ist, entzündet werden in einer Art und Weise, die eine sich selbst erhaltende Verbrennung gewährleistet.

Weitere Vorteile ergeben sich aus den weiteren in den weiteren abhängigen Ansprüchen bzw. in der Beschreibung genannten Merkmalen.

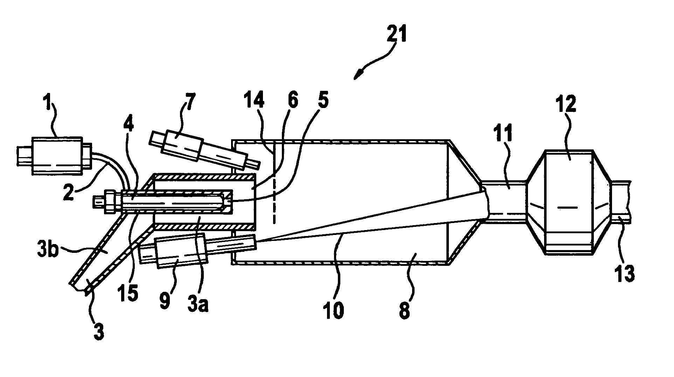

Zeichnung Ein Ausführungsbeispiel der Erfindung ist in der Zeichnung dargestellt und in der nachfolgenden Beschreibung näher erläutert. Figur 1 zeigt hierbei eine erfindungsgemäße Brennerkonstruktion zur Durchführung des erfindungsgemäßen Verfahrens.

Beschreibung der Ausführungsbeispiele Figur 1 zeigt eine Vorrichtung zur Erzeugung eines Betriebsmittels, speziell eines Reduktionsmittels zur Abgasnachbehandlung von mit einer Brennkraftmaschine ausgestatteten Kraftfahrzeugen. Das Reduktionsmittel kann am Ausgang 13 der Vorrichtung entnommen und einer Abgasleitung der Brennkraftmaschine zugeführt werden. Die Vorrichtung 21 weist eine Brennkammer 8 auf, in die eine Luftzuleitung 3 mündet. Die Luftzuleitung 3 weist dabei eine in die Brennkammer 8 hineinragende Drallkammer 3a und eine sich auf der der Brennkammer abgewandten Seite der Drallkammer 3a anschließenden Anschlussleitung 3b auf. Die Anschlussleitung 3b ist in einem von Null verschiedenen Winkel relativ zur Drallkammer 3a angeordnet, sodass über die Anschlussleitung 3b zugeführte Luft beim Austreten aus der Drallkammer hinein in die Brennkammer 8 mit einem Drall versehen ist, also eine inhomogene Luftströmung ausbildet. Innerhalb der Drallkammer 3a ist ein Vorheizelement in Form einer als Glühstiftkerze 4 ausgebildeten elektrischen Heizung angeordnet. Die Glühstiftkerze 4 erstreckt sich entlang einer Längsachse der Drallkammer 3a, wobei das eine Ende der länglichen Glühstiftkerze zur Brennkammer hin orientiert ist, sich jedoch innerhalb der Drallkammer 3a befindet. Das der Brennkammer 8 abgewandte Ende der Glühstiftkerze 4 ragt, gegenüber der Luftzuleitung 3 abgedichtet, aus der Luftzuleitung 3 heraus, wobei die Glühstiftkerze zur Ausbildung eines insbesondere mit einer Flüssigkeit befüllbaren Ringspalts 15 von einem der Form der Glühstiftkerze angepassten Gehäuse umgeben ist. Dieser Ringspalt 15 ist über ein mit einer Kraftstoffzuleitung 2 verbundenes Einspritzventil 1 dosiert mit Kraftstoff beaufschlagbar. Auf der der Brennkammer zugewandten Seite der Glühstiftkerze öffnet sich der Ringspalt 15 zu einer Austrittsöffnung 5, die über einen der Brennkammer zugewandten Innenbereich der Drallkammer 3a eine Verbindung zur Brennkammer 8 herstellt. Der Austrittsöffnung 6 der Drallkammer benachbart ist eine elektrische Zündkerze 7 angeordnet. Sowohl die Zündkerze 7 als auch die Austrittsöffnung 6 der Drallkammer sind auf ein Flammenstabilisierungsmittel in Form eines Metallnetzes 14 ausgerichtet, wobei das Metallnetz 14 beabstandet zur Austrittsöffnung 6 und auch beabstandet zur Zündkerze 7 in der Brennkammer 8 angeordnet ist. Auf der der Austrittsöffnung 6 der Drallkammer und der Zündkerze 7 gegenüberliegenden Seite der Brennkammer 8 befindet sich die Austrittsöffnung 11 der Brennkammer. Ein zweites Einspritzventil 9 ragt mit seiner Öffnung auf der Seite in die Brennkammer 8 hinein, auf der auch die Zündkerze 7 und die Drallkammer 3a in die Brennkammer hineinragt. Das Einspritzventil 9 ist dabei auf die Austrittsöffnung 11 der Brennkammer hin ausgerichtet, sodass bei geöffnetem Einspritzventil 9 sich ein auf die Austrittsöffnung 11 zielender Kraftstoffspray 10 ausbilden kann. Stromabwärts der Austrittsöffnung 11 der Brennkammer schließt sich eine Katalysatoreinrichtung 12 in Form eines Reformerkatalysators zur partiellen Oxidation an, dessen Ausgang 13 wiederum das gewünschte Reduktionsmittel entnommen werden kann.

Neben Kohlenwasserstoffen, also insbesondere Otto- bzw. Dieselkraftstoff, können auch Wasserstoff und / oder Kohlenmonoxid als Reduktionsmittel bei der Regeneration von NOₓ -Speicherkatalysatoren eingesetzt werden. Die Verwendung eines solchen Synthesegases aus Wasserstoff oder Kohlenmonoxid bzw. aus einer Mischung von beidem führt im Vergleich zur Verwendung von Kohlenwasserstoffen zu einer eflizienteren Reduktion bei niedrigeren Katalysatortemperaturen. Dabei kann die Regeneration eines NOₓ - Speicherkatalysators zu Temperaturen im Bereich von 200 Grad Celsius bis 150 Grad Celsius verschoben werden. Um das Betanken des Kraftfahrzeugs mit Wasserstoff bzw. Kohlenmonoxid aus weiteren Betriebsmitteln sowie das Mitführen der notwendigen Druckgas bzw. Flüssigspeicher zu vermeiden, kann das Synthesegas durch einen sogenannten Reformierungsprozess ("CPOX", Abkürzung für den englischen Ausdruck "Catalytic Partial Oxidation") aus flüssigen Kohlenwasserstoffen, insbesondere Otto- und Dieselkraftstoff, direkt im Fahrzeug mittels der erfindungsgemäßen Vorrichtung erzeugt werden. Das System mit integriertem Brenner zeichnet sich dabei durch kurze Startzeiten im Bereich unterhalb von zehn Sekunden und einer hohen Dynamik bei der bedarfsgerechten Bereitstellung des Wasserstoff-/Kohlenmonoxid- Gemischs aus. Bei dem katalytisch unterstützten Reformierungsprozess werden Luft und Kraftstoff bei unterstöchiometrischen Bedingungen, also bei einem Lambda-Wert im Bereich insbesondere zwischen 0,3 und 0,45, zu einem wasserstoff- und kohlenmonoxidreichen Synthesegas umgesetzt. Hierzu muss das in den Reformerkatalysator 12 zur partiellen Oxidation eintretende Eduktgemisch bezüglich Temperatur und homogener Durchmischung aufbereitet werden. Der aus einem Fahrzeugtank über eine nicht näher dargestellte konventionelle Elektrokraftstoffpumpe und ein Druckhalteventil bei ca. 2 bis 3bar bereitgestellte Kraftstoff wird bedarfsgerecht über das Niederdruckeinspritzventil 1 dem Brenner zugeführt. Um eine stabile und emissionsarme Verbrennung zu erreichen, wird der Kraftstoff im Brenner mittels der Glühstiftkerze 4 verdampft. Um Pulsationen im Brenner, die zum Verlöschen der Flamme und zu erhöhten Emissionen führen können, zu vermeiden, wird das Ventil vorzugsweise bei Taktfrequenzen oberhalb von 30 Hertz betrieben. Der dosierte Kraftstoff fließt hierbei über die als Röhrchen ausgeführte Kraftstoffleitung 2 in den Ringspalt 15 und verdampft an der heißen Oberfläche der Glühstiftkerze. Durch die geringe Querschnittsfläche des Röhrchens 2 wird das Einspritzventil 1 vom heißen Verdampferbereich thermisch entkoppelt. Die Pulsierung der benötigten Verbrennungsluft erfolgt über die Luftzuleitung 3, die über ein nicht näher dargestelltes elektromagnetisch betätigbares Ventil, eine Drossel oder eine andere geeignete Methode mit Luft beaufschlagt werden kann, wobei die Luft aus einem Druckspeicher in Abhängigkeit vom Abgasgegendruck bei ca. 0,2 (bei Leerlauf) bis 1,5 bar (bei Volllast, insbesondere bei bereits gefülltem Dieselpartikelfilter) entnommen werden kann. Die Befüllung des Luftspeichers, der nicht näher dargestellt ist, erfolgt dabei über einen Kompressor oder den im Fahrzeug vorhandenen Turbolader, denn aufgrund der vergleichsweise hohen Abgasgegendrücke von bis zu 500mbar im Fahrzeug reichen konventionelle Gebläse nicht aus, um den nötigen Vordruck zur Dosierung der Luft bereitzustellen. Die Brennerluft wird dem Verdampfer bzw. Brenner über die Drallkammer 3a tangential zugeführt. Dadurch wird die Vermischung der Luft mit dem verdampften Brennstoff (Kraftstoff als Ausgangsstoff) unterstützt. Der aufgeprägte Drall fördert durch die Ausbildung von Rezirkulationsgebieten zudem den Ausbrand und die Stabilisierung der Flamme innerhalb der Brennkammer 8. Zur Zündung des in die Brennkammer 8 eintretenden Gemischs von verdampftem Kraftstoff, der über das Einspritzventil 1 zugeführt wird, und der Luft dienen zwei Zündelektroden bzw. die konventionelle Zündkerze 7, mittels denen bzw. mittels der über eine elektrische Hochspannung ein Lichtbogen erzeugt wird. Die Zündung ist hierbei nur beim Start des Brenners erforderlich, weil die Flamme sich selbst erhält. Dies ist möglich, weil sich die Brennkammer 8 in einem definiertem Zustand mit definierten Gasflüssen befindet, also nicht innerhalb einer Abgasleitung des Kraftfahrzeugs, bei der unterschiedliche Gasdrücke und unterschiedliche Gaszusammensetzungen keinen stabilen Flammenbetrieb gewährleisten können. Darüber hinaus unterstützt der Luftdrall eine gute Vermischung und damit eine effiziente Verbrennung. Darüber hinaus stabilisiert der Flammenhalter 14 bzw. das Metallnetz 14 eine einmal angeregte Verbrennung des über das Einspritzventil 1 zugeführten und mittels der Glühstiftkerze 4 verdampften Kraftstoffs. Im Bereich der Austrittsöffnung 6 der Drallkammer und der Zündkerze 7 herrschen überstöchiometrische Bedingungen (Lambda-Wert zwischen 1,1 und 1,2) vor, sodass der über das Einspritzventil 1 zugeführte Kraftstoff vollständig verbrannt werden kann. Hierbei werden im Brennerbetrieb im Bereich der Zündkerze bei der Verbrennung des Kraftstoffs aus dem Einspritzventil 1 Verbrennungsumsätze erzielt, die zu einer Wärmeleistung im Bereich zwischen 0,5 und 3Kilowatt führen. Im Anschluss an die Verbrennung erfolgt eine Zugabe des Kraftstoffs als Ausgangsstoff für den Reformerkatalysator 12 über das zweite Niederdruckeinspritzventil 9. Durch den hohen Impuls des aus der Düsenöffnung des Einspritzventils 9 austretenden Kraftstoffs kann dieser durch die Brennkammer 8 hindurch dem katalytischen Reformierungsprozess im Katalysator 12 zugeführt werden, ohne die Stabilität des Brenners einzuschränken. Dabei wird der flüssig eingebrachte Kraftstoff aus dem Einspritzventil 9 im heißen Brennerabgas schnell und vollständig verdampft, sodass eine Schädigung des Katalysators 12 durch Auflreffen von Kraftstofftropfen vermieden werden kann. Der über das zweite Einspritzventil 9 zugeführte Kraftstoff wird in der Brennkammer 8 vollständig verdampft, aber allenfalls partiell oxidiert. Bei Verwendung eines derartigen Reformerkatalysators zur partiellen Oxidation entsteht viel Wasserstoff und Kohlenmonoxid. Diese Moleküle sind trotz ihres gegenüber flüssigen Kohlenwasserstoffen geringeren Reduktionspotentials zu bevorzugen, da sie aufgrund ihrer geringeren Größe im Vergleich zu langkettigen Kohlenwasserstoffen reaktiver sind und den Vorteil bieten, einen zu regenerierenden NOₓ -Speicherkatalysator nicht zu verrußen.

In einer alternativen Ausführungsform kann jedoch auch ein Crackkatalysator eingesetzt werden. Ein Crackkatalysator zerhackt langkettige Kohlenwasserstoffmoleküle in kürzere Molekülketten, die ebenfalls als Reduktionsmittel zur Regenerierung von NOₓ - Speicherkatalysatoren Verwendung finden können, allerdings mit dem Nachteil einer teilweisen Verrußung nachgeordneter Abgaseinrichtungen. Neben der Regenerierung von NOₓ -Speicherkatalysatoren oder von Dieselpartikelfiltern kann über den Ausgang 13 austretendes Betriebsmittel auch in mobilen Brennstoffzellensystemen, in Zuheizgeräten für Personenkraftwagen wie Standheizungen und zur Emissionsminderung beim Fahrzeugkaltstart verwendet werden. Durch vormotorische Zumischung von Wasserstoff und Kohlenmonoxid zum flüssigen Kraftstoff kann hierbei der Verbrennungsprozess der Brennkraftmaschine positiv beeinflusst werden. Es entstehen weniger Rohemissionen, die der noch kalte Abgaskatalysator nicht umsetzen kann. Hierfür müssen die Startzeiten des Systems sehr klein sein, da ein Großteil der Emissionen beim Start zirka in den ersten 30 Sekunden entsteht. In einer weiteren alternativen Ausführungsform kann im Bereich der Austrittsöffnung 11 der Brennkammer bzw. in einem Bereich zwischen der Brennkammer 8 und der Katalysatoreinrichtung 12 eine zweite Luftzuführung vorgesehen sein, um Sauerstoff für die partielle Oxidation des mittels des Einspritzventils 9 dosierten Kraftstoffs zuzuführen.

Die erfindungsgemäße Vorrichtung kann also ein Zündelement (7), insbesondere eine Zündkerze oder zwei Zündelektroden, enthalten, wobei das Zündelement wahlweise im Bereich der Mündung der Luftzuleitung in die Brennkammer angeordnet ist.

Es kann vorgesehen sein, dass die Ausgangsstoffzuführungseinheit (9) im Bereich der Mündung der Luftzuleitung in die Brennkammer angeordnet ist, so dass über die Ausgangsstoffzuführungseinheit zugeführter Ausgangsstoff sich mit Stoffen vermischen kann, die aus der Anregung einer Verbrennung des über das Vorheizelement zugeführten Ausgangsstoffs über das Zündelement resultieren.

Es kann ferner vorgesehen sein, dass die Brennkammer eine Ausgangsöffnung (11) aufweist, wobei die Ausgangsöffnung auf der der Ausgangsstoffzuführungseinheit (9) gegenüberliegenden Seite der Brennkammer angeordnet ist. Wahlweise kann hierbei die Ausgangsöffnung (11) mit der Katalysatoreinrichtung verbunden sein, wobei der Ausgang (13) der Katalysatoreinrichtung mit einer Abgasleitung einer Brennkraftmaschine verbindbar ist.

Es kann ferner vorgesehen sein, dass die Brennkraftmaschine zu einem Kraftfahrzeug gehört und dass der Ausgangsstoff Kraftstoff ist, mit dem die Brennkraftmaschine betrieben werden kann.

Es kann ferner vorgesehen sein, dass die Katalysatoreinrichtung (12) einen Reformerkatalysator zur katalytischen partiellen Oxidation aufweist.

Es kann ferner vorgesehen sein, dass die Vorrichtung eingerichtet ist zur nachmotorischen Einbringung des Betriebsmittels in eine Abgasleitung des Kraftfahrzeugs.

## Patentansprüche

1. Vorrichtung zur Erzeugung eines Betriebsmittels für ein Kraftfahrzeug zur Abgasnachbehandlung des Kraftfahrzeugs, aus einem Ausgangsstoff, mit einer Heizungseinrichtung, mit einem Mittel zur Erzeugung eines Ausgangsstoff-Luft-Gemischs und mit einer Katalysatoreinrichtung, wobei das erwärmte Ausgangsstoff-Luft-Gemisch der Katalysatoreinrichtung (12) zugeführt wird, so dass einem Ausgang (13) der Katalysatoreinrichtung das Betriebsmittel entnehmbar ist, **dadurch gekennzeichnet,**
- **dass** die Speisung der Heizungseinrichtung mit dem Ausgangsstoff mittels eines vorgeschalteten ersten Einspritzventils (1) erfolgt,
- **dass** die Heizungseinrichtung ein Vorheizelement (4) umfasst, wobei das Vorheizelement in eine Luftzuleitung (3) integriert ist, so dass ein Teil des Ausgangsstoffs mittels des Vorheizelements in die gasförmige Phase überführt und nach Verlassen des Vorheizelements von einem Luftstrom erfasst werden kann,
- wobei der Luftstrom in eine der Katalysatoreinrichtung vorgeordnete, das Mittel zur Erzeugung des Ausgangsstoffs-Luft-Gemischs bildende Kammer (8) mündet,
- wobei die Kammer (8) als Brennkammer zur zumindest teilweisen Verbrennung von Ausgangstoff eingerichtet ist und
- eine Ausgangsstoffzuführungseinheit (9) in die Brennkammer mündet.

2. Vorrichtung nach Anspruch 1, **dadurch gekennzeichnet, dass** die Kammer (8) außerhalb einer Abgasleitung des Kraftfahrzeugs angeordnet ist.

3. Vorrichtung nach Anspruch 1 oder 2, **dadurch gekennzeichnet, dass** die Luftzuleitung (3) eingerichtet ist zur Beaufschlagung des Luftstroms mit einem Drall.

4. Vorrichtung nach einem der vorhergehenden Ansprüche, **dadurch gekennzeichnet, dass** die Luftzuleitung eingerichtet ist zur Beaufschlagung mit Druckluft, insbesondere mit Druckluft in einem Druckbereich von zirka 0,2 bis 1,5 bar.

5. Vorrichtung nach Anspruch 4, **dadurch gekennzeichnet, dass** die Druckluft komprimierte Umgebungsluft und/oder von einer Abgasleitung des Kraftfahrzeugs abgezweigtes komprimiertes Abgas ist.

6. Vorrichtung nach einem der vorhergehenden Ansprüche, **dadurch gekennzeichnet, dass** das Vorheizelement eine Glühstiftkerze aufweist.

7. Vorrichtung nach Anspruch 6, **dadurch gekennzeichnet, dass** um die Glühstiftkerze herum ein Ringspalt (15) gebildet ist zur Umspülung der Glühstiftkerze mit dem Ausgangsstoff.

8. Vorrichtung nach einem der vorhergehenden Ansprüche, **dadurch gekennzeichnet, dass** beabstandet zur Luftzuleitung ein Flammenstabilisierungsmittel (14), insbesondere ein Metallnetz, in der Brennkammer angeordnet ist.

9. Vorrichtung nach einem der vorhergehenden Ansprüche, **dadurch gekennzeichnet, dass** die Ausgangsstoffzuführungseinheit ein zweites Einspritzventil aufweist.

10. Verfahren zur Erzeugung eines Betriebsmittels für ein Kraftfahrzeug zur Abgasnachbehandlung des Kraftfahrzeugs, aus einem Ausgangsstoff, bei dem der Ausgangsstoff erwärmt und mit Luft gemischt wird, wobei das erwärmte Ausgangsstoff-Luft-Gemisch einer Katalysatoreinrichtung (12) zugeführt wird, so dass einem Ausgang (13) der Katalysatoreinrichtung das Betriebsmittel entnehmbar ist, **dadurch gekennzeichnet, dass** die Speisung der Heizungseinrichtung mit dem Ausgangsstoff mittels eines vorgeschalteten ersten Einspritzventils (1) erfolgt, dass ein Teil des Ausgangsstoffs mittels eines Vorheizelements in die gasförmige Phase überführt und nach Verlassen des Vorheizelements von einem Luftstrom erfasst wird, wobei der Luftstrom in eine der Katalysatoreinrichtung vorgeordnete, das Mittel zur Erzeugung des Ausgangsstoffs-Luft-Gemischs bildende Kammer (8) mündet, wobei die Kammer (8) als Brennkammer zur zumindest teilweisen Verbrennung von Ausgangstoff eingerichtet ist und eine Ausgangsstoffzuführungseinheit (9) in die Brennkammer mündet.

## Claims

1. Device for producing an operating medium for a motor vehicle, for the exhaust-gas aftertreatment of the motor vehicle, from a starting substance, having a heating device, having a means for producing a starting-substance/air mixture and having a catalytic converter device, with the heated starting-substance/air mixture being supplied to the catalytic converter device (12) such that the operating medium can be extracted from an outlet (13) of the catalytic converter device, **characterized**
- **in that** the feed of the starting substance to the heating device takes place by means of a first injection valve (1) which is positioned upstream,
- **in that** the heating device comprises a pre-heating element (4), with the pre-heating element being integrated into an air supply line (3) such that a part of the starting substance can be changed into the gaseous phase by means of the pre-heating element and, after leaving the pre-heating element, can be encompassed by an air flow,
- with the air flow opening out into a chamber (8) which is positioned upstream of the catalytic converter device and which forms means for producing the starting-substance/air mixture,
- with the chamber (8) being designed as a combustion chamber for the at least partial combustion of starting substance, and
- with a starting substance supply unit (9) opening out into the combustion chamber.

2. Device according to Claim 1, **characterized in that** the chamber (8) is arranged outside an exhaust line of the motor vehicle.

3. Device according to Claim 1 or 2, **characterized in that** the air supply line (3) is designed to impart a swirl to the air flow.

4. Device according to one of the preceding claims, **characterized in that** the air supply line is designed to be acted on with compressed air, in particular with compressed air in a pressure range from approximately 0.2 to 1.5 bar.

5. Device according to Claim 4, **characterized in that** the compressed air is compressed ambient air and/or compressed exhaust gas branched off from an exhaust line of the motor vehicle.

6. Device according to one of the preceding claims, **characterized in that** the pre-heating element has a glow plug.

7. Device according to Claim 6, **characterized in that** an annular gap (15) is formed around the glow plug for the flow of the starting substance around the glow plug.

8. Device according to one of the preceding claims, **characterized in that** a flame stabilizing means (14), in particular a metal mesh, is arranged in the combustion chamber spaced apart from the air supply line.

9. Device according to one of the preceding claims, **characterized in that** the starting substance supply unit has a second injection valve.

10. Method for producing an operating medium for a motor vehicle, for the exhaust-gas aftertreatment of the motor vehicle, from a starting substance, in which method the starting substance is heated and mixed with air, with the heated starting-substance/air mixture being supplied to a catalytic converter device (12) such that the operating medium can be extracted from an outlet (13) of the catalytic converter device, **characterized in that** the feed of the starting substance to the heating device takes place by means of a first injection valve (1) which is positioned upstream, **in that** a part of the starting substance is changed into the gaseous phase by means of a pre-heating element and, after leaving the pre-heating element, is encompassed by an air flow, with the air flow opening out into a chamber (8) which is positioned upstream of the catalytic converter device and which forms means for producing the starting-substance/air mixture, with the chamber (8) being designed as a combustion chamber for the at least partial combustion of starting substance, and with a starting substance supply unit (9) opening out into the combustion chamber.

## Revendications

1. Dispositif pour produire un moyen de production pour un véhicule automobile, pour le post-traitement des gaz d'échappement du véhicule automobile, à partir d'une substance de départ, avec un dispositif de chauffage, avec un moyen pour produire un mélange d'air et de substance de départ et avec un dispositif de catalyseur, le mélange d'air et de substance de départ chauffé étant acheminé au dispositif de catalyseur (12), de sorte que l'on puisse prélever d'une sortie (13) du dispositif de catalyseur le moyen de production, **caractérisé en ce que**
- l'alimentation du dispositif de chauffage en substance de départ s'effectue au moyen d'une première soupape d'injection prémontée (1),
- le dispositif de chauffage comprend un élément de préchauffage (4), l'élément de préchauffage étant intégré dans une conduite d'amenée d'air (3), de sorte qu'une partie de la substance de départ soit transférée au moyen de l'élément de préchauffage dans une phase gazeuse et après avoir quitté l'élément de préchauffage, puisse être emportée par un flux d'air,
- le flux d'air débouchant dans une chambre (8) placée en amont du dispositif de catalyseur, formant le moyen de production du mélange d'air et de substance de départ,
- la chambre (8) étant réalisée en tant que chambre de combustion pour la combustion au moins partielle de la substance de départ, et
- une unité d'alimentation en substance de départ (9) débouchant dans la chambre de combustion.

2. Dispositif selon la revendication 1, **caractérisé en ce que** la chambre (8) est disposée en dehors d'une conduite de gaz d'échappement du véhicule automobile.

3. Dispositif selon la revendication 1 ou 2,
**caractérisé en ce que** la conduite d'alimentation en air (3) est prévue pour solliciter le flux d'air avec un tourbillon.

4. Dispositif selon l'une quelconque des revendications précédentes, **caractérisé en ce que** la conduite d'alimentation en air est prévue pour produire une sollicitation avec de l'air sous pression, notamment avec de l'air sous pression dans une plage de pression de 0,2 à 1,5 bar environ.

5. Dispositif selon la revendication 4, **caractérisé en ce que** l'air sous pression est de l'air ambiant comprimé et/ou du gaz d'échappement comprimé prélevé d'une conduite de gaz d'échappement du véhicule automobile.

6. Dispositif selon l'une quelconque des revendications précédentes, **caractérisé en ce que** l'élément de préchauffage présente une bougie-crayon de préchauffage.

7. Dispositif selon la revendication 6, **caractérisé en ce qu'**un espace annulaire (15) est formé tout autour de la bougie-crayon de préchauffage pour faire circuler de la substance de départ autour de la bougie-crayon de préchauffage.

8. Dispositif selon l'une quelconque des revendications précédentes, **caractérisé en ce que** l'on dispose à distance de la conduite d'alimentation en air un moyen de stabilisation de flamme (14), notamment un filet en métal, dans la chambre de combustion.

9. Dispositif selon l'une quelconque des revendications précédentes, **caractérisé en ce que** l'unité d'alimentation en substance de départ présente une deuxième soupape d'injection.

10. Procédé pour produire un moyen de production pour un véhicule automobile, pour le post-traitement des gaz d'échappement du véhicule automobile, à partir d'une substance de départ, dans lequel la substance de départ est chauffée et mélangée avec de l'air, le mélange d'air et de substance de départ chauffé étant acheminé à un dispositif de catalyseur (12) de sorte que l'on puisse prélever d'une sortie (13) du dispositif de catalyseur le moyen de production, **caractérisé en ce que** l'alimentation du dispositif de chauffage en substance de départ s'effectue au moyen d'une première soupape d'injection (1) montée en amont, **en ce qu'**une partie de la substance de départ est transférée au moyen d'un élément de préchauffage dans une phase gazeuse et après avoir quitté l'élément de préchauffage, est emportée par un flux d'air, le flux d'air débouchant dans une chambre (8) placée en amont du dispositif de catalyseur, formant le moyen de production du mélange d'air et de substance de départ, la chambre (8) étant réalisée en tant que chambre de combustion pour la combustion au moins partielle de la substance de départ, et une unité d'alimentation en substance de départ (9) débouchant dans la chambre de combustion.
